(19) Europäisches Patentamt
European Patent Office
Office européen des brevets

(11) **EP 2 540 589 B1**

(12) **EUROPÄISCHE PATENTSCHRIFT**

(45) Veröffentlichungstag und Bekanntmachung des Hinweises auf die Patenterteilung:
**28.06.2017 Patentblatt 2017/26**

(21) Anmeldenummer: **12002413.8**

(22) Anmeldetag: **03.04.2012**

(51) Int Cl.:
*B60W 10/08* (2006.01)   *B60W 20/00* (2016.01)
*B60W 30/14* (2006.01)   *B60W 10/30* (2006.01)
*B60W 30/18* (2012.01)   *B60W 30/186* (2012.01)
*B60W 10/06* (2006.01)   *B60W 30/182* (2012.01)
*B60W 50/00* (2006.01)   *B60W 30/16* (2012.01)

(54) **Verfahren und Steuereinrichtung zur Steuerung oder Regelung von Fahrzeugsystemen**

Control device and method for controlling and/or regulating vehicle systems

Procédé et dispositif de commande destinés à la commande ou au réglage de systèmes de véhicules

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2011 DE 102011106342**

(43) Veröffentlichungstag der Anmeldung:
**02.01.2013 Patentblatt 2013/01**

(73) Patentinhaber: **WABCO GmbH**
**30453 Hannover (DE)**

(72) Erfinder:
• **Breuer, Karsten**
**88179 Oberreute (DE)**
• **Hanslik, Daniel**
**30916 Isernhagen (DE)**

(56) Entgegenhaltungen:
EP-A1- 1 170 652       EP-A2- 1 475 265
WO-A1-2009/010199    DE-A1-102004 017 115
DE-A1-102006 034 411   DE-T2- 69 715 438

EP 2 540 589 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Steuereinrichtung zur Steuerung oder Regelung von Fahrzeugsystemen. Das Verfahren und die Steuereinrichtung können insbesondere als Systemmanagement zur Einstellung und gegebenenfalls Regelung unterschiedlicher Einrichtungen und Komponenten des Fahrzeugs dienen.

Derartige Fahrzeugsysteme sind unter anderem Fahrdynamikregelungen zur Regelung in Fahrzeuglängsrichtung. Diese können zum einen Geschwindigkeitsregelungen zur Einstellung einer konstanten Fahrgeschwindigkeit sein, die auch als Tempomatfunktion oder CC (Cruise Control)- Regelung bezeichnet wird oder eine Abstandsregelung zur Einstellung eines Wunschabstandes zu einem vorausfahrenden Fahrzeugs sein, die auch als ACC (Adaptive Cruise Control) bezeichnet wird.

Die gattungsbildende WO2009010199A1 zeigt alle Merkmale des Oberbegriffs der unabhängigen Ansprüche 1 und 12 und beschreibt ein Verfahren und eine Vorrichtung zum Ermitteln eines Schubbetriebs eines Fahrzeugs, insbesondere Nutzfahrzeugs, mit einer Verarbeitungseinrichtung, die zur Ermittlung des Schubbetriebs dient. Die Verarbeitungseinrichtung ist geeignet, zumindest in Abhängigkeit von Höhenprofildaten einer vom Fahrzeug befahrenen oder zu befahrenden Strecke ein voraussichtliches Auftreten zumindest eines Schubbetriebs zu ermitteln. Ebenso wird hierzu die Verwendung eines Navigationssystems einbezogen. Eine Synchronisierung eines Luftaufbereitungsbetriebs mit Schubbetrieben des Verbrennungsmotors ist hiermit möglich.

Die DE69715438T2 betrifft eine Vorrichtung und ein Verfahren zum Einschalten von Hilfsaggregaten, welche durch einen Motor eines Fahrzeugs angetrieben werden, wobei mindestens ein Hilfsaggregat derart gestaltet ist, dass es von dem Motor angetrieben wird, bis zumindest ein minimaler Betriebsgrad bezüglich des Status des Hilfsaggregats erhalten ist. Die DE 10 2004 017 115 A1 beschreibt derartige Verfahren. Hierbei kann eine Kraftstoff sparende Betriebsart eingestellt werden, indem eine Beschleunigungsphase und eine sich anschließende Ausrollphase des Fahrzeugs eingestellt werden. Eine derartige Ausrollphase wird erreicht, wenn der Motor von seiner Wirkverbindung zu den Rädern unterbrochen wird, d.h. durch Betätigung der Kupplung und/oder Einstellung eines Leerlaufs des Getriebes. In der Ausrollphase kann ergänzend der Verbrennungsmotor ausgeschaltet werden. Bei Erreichen der unteren Geschwindigkeits- Schwelle der Ausrollphase wird vor dem Wechsel der Fahrstufe dann zunächst der Verbrennungsmotor gestartet. Die Entscheidung, ob der Verbrennungsmotor abgeschaltet wird, kann von der Zeit abhängig sein, die das Fahrzeug bis zum Erreichen der unteren Geschwindigkeits- Schwelle schätzungsweise benötigen wird. Bei einer kürzeren benötigten Zeit wird hierbei lediglich ausgekuppelt bzw. das Getriebe in neutrale Position geschaltet.

Die DE 2008 029 453 A1 beschreibt ein Verfahren zum Einstellen eines so genannten Segelmodus bei einem Kraftfahrzeug, in dem keine Drehmomentübertragung erfolgt, d.h. insbesondere eines ausgekuppelten Zustandes ohne Bremswirkung. Hierbei kann der Segelmodus über einen Tempomat oder eine ACC-Regelung eingestellt werden. Die Einstellung in den Segelmodus kann erfolgen, wenn über eine geeignete Sensorik erkannt wird, dass die momentane Leistungs- bzw. Geschwindigkeitsanforderung auch ohne Motor erfüllbar ist.

Die WO 2009/060241 A1 beschreibt ein Fahrzeugsystem, bei dem die Position eines Fahrzeugs in Kartendaten angezeigt wird, wobei zur Treibstoffeinsparung ein Freilauf-Modus einstellbar ist und hierfür vorgesehene Streckenbereiche in der Karte angezeigt werden.

Die EP 1 702 152 B1 beschreibt ein Verfahren und eine Vorrichtung zum Betreiben einer Antriebseinheit eines Fahrzeuges im Schubbetrieb. Hierbei ist vorgesehen, eine Stellgröße der Antriebseinheit einzustellen, wobei diese Stellgröße der Zündwinkel und/oder eine Getriebeübersetzung ist. Hierzu wird eine Fahrsituation ermittelt, bei der die Fahrgeschwindigkeit des eigenen Fahrzeugs oder eines vorausfahrenden Fahrzeugs ausgewertet wird. Hierbei können Schwellwerte des Abstandes zum vorausfahrenden Fahrzeug festgelegt werden.

Die DE 10 2008 005 328 A1 beschreibt ein Verfahren zum energieeffizienten Betrieb eines Kraftfahrzeuges, bei dem eine Abstandsregelung und eine Fahrzeugumgebungserfassung vorgesehen sind. Hierbei kann insbesondere auch die Geschwindigkeit eines vorausfahrenden Objektes erfasst werden. Weiterhin ist es vorgesehen, in einem Rollzustand des Fahrzeuges den Motor ganz abzuschalten.

Die DE 10 2007 035 424 A1 beschreibt ein Betriebsverfahren für ein Fahrzeug mit Fahrzeugumfeldsensorik und ACC. Hierbei ist ein Segelzustand des Fahrzeugs mit geöffneter Kupplung automatisch aktivierbar.

Durch derartige Segelfunktionen bzw. Rollzustände des Fahrzeugs, in denen keine Drehmomentübertragung auf die Abtriebswelle (von dem Verbrennungsmotor oder einem Retarder) übertragen wird und weiterhin keine Drehmomentübertragung durch Reibungsbremsen erfolgt, kann eine deutliche Energieeinsparung erreicht werden. Eine derartige Funktion wird im Allgemeinen im Längsregler des ACC oder CC als Regelalgorithmus realisiert. Somit liegt im Längsregler die Information vor, welches Antriebssollmoment (Motor, Dauerbremsen, Radbremsen) anzufordern ist.

Das Systemmanagement eines Fahrzeugs betrifft weiterhin das Zu- und Abschalten von Nebenaggregaten, d.h. Leistungseinrichtungen bzw. Hilfsmaschinen im Fahrzeug, die nicht unmittelbar die Fortbewegung des Fahrzeugs bewirken. Derartige Nebenaggregate werden vom Motor angetrieben und umfassen insbesondere ein oder mehrere Generatoren, einen Kompressor für ein Druckluftsystem, das in Nutzfahrzeugen für z.B. das Bremssystem und Luftfederungssystem vorgesehen ist, gegebenenfalls einen Kompressor der Klimaanlage und z.B. eine Hydraulikpumpe einer Servolenkung oder eines Hybridantriebes, Kühlmittelpumpe des Motors, Kühlventilator, Kühlmittelpumpe Dauerbremsen oder Nebenabtriebe für Aufbauaggregate. Hierbei ist es bekannt, Nebenaggregate zuzuschalten, wenn ein Bremsvorgang aktiv ist, z.B. bei Betätigen der Radbremsen. Weiterhin können zur Ausnutzung einer Motorbremswirkung Nebenaggregate zugeschaltet werden, um die kinetische Energie des Fahrzeugs zum Antrieb der Nebenaggregate zu nutzen.

Der Erfindung liegt die Aufgabe zugrunde, ein Verfahren und eine Steuereinrichtung zur Steuerung oder Regelung von Fahrzeugsystemen zu schaffen, die einen geringen Kraftstoffverbrauch bzw. Energieverbrauch ermöglichen.

Diese Aufgabe wird durch ein Verfahren nach Anspruch 1 und eine Steuereinrichtung nach Anspruch 12 gelöst. Die Unteransprüche beschreiben bevorzugte Weiterbildungen.

Der Erfindung liegt der Gedanke zugrunde, die Dauer des Segel- oder lastfreien Rollzustandes durch Abschalten von Nebenaggregaten zu maximieren, um den Energieverbrauch zu reduzieren, gleichzeitig aber die Anzahl der unnötigen Zu- und Abschaltvorgänge zu minimieren und zu verhindern. Ein Zuschalten von Nebenaggregaten während Bremsvorgängen kann zwar dahingehend sinnvoll sein, dass während des Bremsvorgangs kein antreibender Motorbetrieb erfolgt und daher keine Energie des Fahrzeugs zum Betrieb des Nebenaggregats genutzt werden kann. Die Zeitdauer des Bremsvorgangs kann jedoch gegebenenfalls kurz sein und von einer Phase mit positivem Motorsollmoment, abgelöst werden. Bei einer Zuschaltung von Nebenaggregaten nur im Bremsbetrieb kann das Nebenaggregat (z.B. Luftkompressor) seine eigentliche Aufgabe nicht oder nur unzureichend erfüllen. Daher ist die zeitliche Ausdehnung des Nebenaggregatbetriebes über Bremssituationen hinaus in der Regel vorteilhaft.

Erfindungsgemäß wird die voraussichtliche Zeitdauer eines Rollzustandes bzw. Segelzustandes des Fahrzeugs ermittelt; diese Ermittlung kann insbesondere durch Abschätzung erfolgen. Auf Grundlage der so ermittelten voraussichtlichen Zeitdauer des Rollzustandes wird dann entschieden, ob ein oder mehrere Nebenaggregate abgeschaltet werden, um hierdurch den Schaltzustand eines Nebenaggregates festzulegen, d.h. ob das Nebenaggregat an den Motor angekoppelt oder ausgekoppelt (bzw. im Leerlaufbetrieb) ist. Hierbei wird insbesondere entschieden, ob eine ermittelte voraussichtliche Zeitdauer des Rollzustandes hinreichend groß ist, so dass ein Abschalten des Nebenaggregates als vorteilhaft bzw. lohnenswert bewertet wird, um den energetisch günstigen Zustand zeitlich zu verlängern. Hierzu kann ein Schwellwert angesetzt werden, mit dem die ermittelte voraussichtliche Zeitdauer verglichen wird.

Somit können Nebenaggregate, die sonst dauerhaft zugeschaltet sind, erfindungsgemäß abgeschaltet werden, um die Rollphase lange aufrecht zu erhalten.

Gemäß einer bevorzugten Ausführungsform sind verschiedene Berechnungsverfahren für die voraussichtliche Zeitdauer des Rollzustandes vorgesehen. Somit kann für diese Berechnung zunächst eine Differenzierung zwischen verschiedenen Berechnungsverfahren erfolgen, wobei diese Differenzierung insbesondere von dem eigenen Fahrzustand und dem Fahrzustand eines vorderen (vorausfahrenden) Fahrzeugs abhängen kann.

Hierbei kann insbesondere zwischen drei grundsätzlichen Situationen unterschieden werden. Gemäß einer ersten Situation, für die ein erstes Berechnungsverfahren angesetzt wird, wird ein ACC-geregelte Annäherungsmanöver an das vordere Fahrzeug (Zielfahrzeug) angesetzt und die voraussichtliche Zeitdauer, die für den Rollzustand angesetzt werden kann, als Zeitdauer der Annäherung an das Zielfahrzeug angesetzt. Somit ist für dieses erste Berechnungsverfahren der Ist-Abstand größer als der Soll-Abstand, und die eigene Fahrgeschwindigkeit größer als die Fahrgeschwindigkeit des vorderen Fahrzeugs. Bei diesem ersten Berechnungsverfahren kann weiterhin zwischen zwei Unterverfahren bzw. Situationsprädiktionen unterschieden werden, nämlich dass der Soll-Abstand in der Rollphase exakt mit dv = 0 erreicht wird, d.h. das ausrollende Fahrzeug den Soll-Abstand innerhalb eines Toleranzbereichs bzw. zulässigen Bereichs erreicht. Oder dieser Soll-Abstand wird voraussichtlich unterschritten, so dass das eigene Fahrzeug nach Abbau der Differenzgeschwindigkeit den Soll-Abstand zunächst wieder einzuregeln hat.

Gemäß dem zweiten Berechnungsverfahren wird angesetzt, dass der derzeitige Ist-Abstand zu gering ist und somit ein ACC-geregeltes Entfernen von dem vorderen Fahrzeug einzustellen ist, z.B. nach einem dichten Einschervorgang.

Gemäß einem dritten Verfahren wird eine mathematische Beschreibung des zeitlichen Verlaufs des von den Fahrdynamikregelgeräten vorgegebenen Antriebssollmomentes betrachtet und hieraus die zeitliche Dauer projiziert, bis das Fahrzeug den Rollzustand wieder verlassen wird. Das dritte Bewertungsverfahren führt somit vorzugsweise eine zeitliche Extrapolation aufgrund der vorherigen Zustände ohne eine Betrachtung der Bewegungsgrößen des eigenen oder vorderen Fahrzeugs durch. Das dritte Bewertungsverfahren ist somit insbesondere auch für Tempomatfunktionen (CC) relevant, weiterhin für Abstandsregelverfahren (ACC).

Grundsätzlich sind auch Kombinationen dieser drei Bewertungsverfahren möglich, z.B. die Verwendung des dritten Bewertungsverfahrens mit Einschränkungen bzw. Ausschlusskriterien, dass z.B. ein Minimalabstand zum vorderen Fahrzeug nicht unterschritten wird.

Erfindungsgemäß werden einige Vorteile erreicht. Es kann aufgrund der im Fahrzeug vorhandenen Daten, insbesondere Daten aus einem CC- oder ACC-System, eine Zeitdauer eines Rollzustandes abgeschätzt werden, um auf Grundlage dieser Abschätzung bzw. Bewertung zu entscheiden, Nebenaggregate zeitweise abzuschalten bzw. ein Zuschalten zu unterdrücken. Dies ist insbesondere für Nebenaggregate sinnvoll, die nur zeitweise anzutreiben sind, z.B. einen Generator.

Somit kann der Energieverbrauch verringert werden, ein komfortables Fahrverhalten ohne unnötige Zu- und Abschaltungen bzw. Ein- und Auskupplungen von Nebenaggregaten erreicht werden und auch der Verschleiß der Nebenaggregate bzw. von deren Kupplungen gering gehalten werden.

In das erfindungsgemäße Verfahren können ergänzend z.B. auch Daten der Fahrzeugumgebung, z.B. Kartendaten oder aus Kartendaten oder vorherigen Fahrten gespeicherte Verbrauchswerte von z.B. Daten über Steigungen und Gefälle der Fahrstrecke mit einbezogen werden, weiterhin auch zusätzliche Messdaten über die Fahrzeugumgebung.

Die erfindungsgemäße Steuereinrichtung wird somit nach einem erfindungsgemäßen Verfahren gesteuert oder geregelt; hierzu wird sie insbesondere in Abhängigkeit der ermittelten voraussichtlichen Zeitdauer einen Schaltzustand eines Nebenaggregates einstellen.

Die Erfindung wird im Folgenden anhand der beiliegenden Zeichnungen an einigen Ausführungsformen erläutert. Es zeigen:

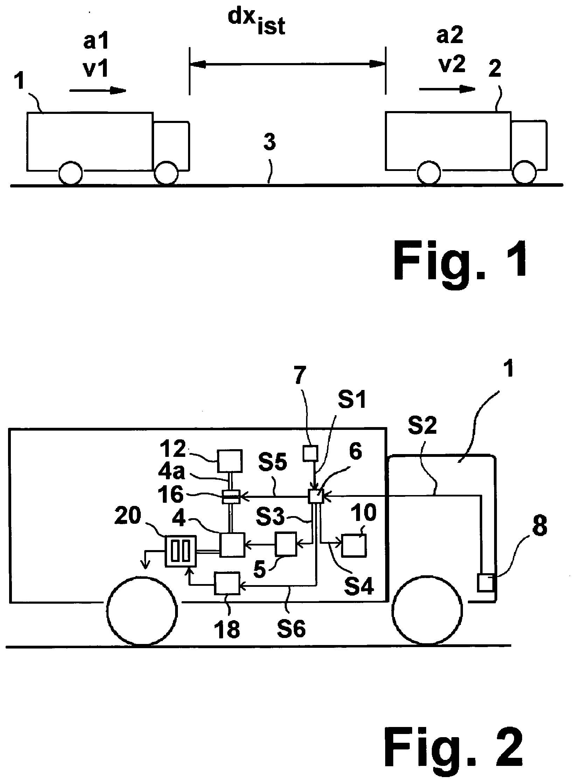

Fig. 1    eine Straßenszene bzw. Fahrsituation auf einer Straße;

Fig. 2    das Fahrzeug 1 aus Fig. 1 mit seinen wesentlichen Funktionseinrichtungen als Blockschaltbild;

Fig. 3    ein Flussdiagramm eines erfindungsgemäßen Verfahrens.

Ein erfindungsgemäßes Fahrzeug 1 fährt hinter einem vorderen Fahrzeug 2 auf einer Fahrbahn 3. Das Fahrzeug 1 ist mit einem ACC- Regelsystem (Adaptive Cruise Control) zur Abstandsregelung zu dem vorderen Fahrzeug 2 ausgestattet. Das Fahrzeug 1 weist einen Verbrennungsmotor 4 (oder auch einen Hybridmotor 4) mit einem Motorsteuergerät 5 sowie eine Steuereinrichtung 6 zur Längsregelung und Abstandshaltefunktion auf, wobei die Steuereinrichtung 6 von einem Geschwindigkeitssensor 7 ein Geschwindigkeitssignal S1 aufnimmt, das die eigene Geschwindigkeit v1 des Fahrzeugs 1 wiedergibt, und weiterhin ein Abstandsmesssignal S2 eines Abstandssensors 8 aufnimmt, der direkt den Ist-Abstand $dx_{ist}$ des eigenen Fahrzeugs 1 zu dem vorderen Fahrzeug 2 misst, z.B. mittels Radar, Ultraschall, Laser oder gegebenenfalls Stereo-Kamera.

Das Geschwindigkeitssignal S1 kann in an sich bekannter Weise aus der Drehzahl der Abtriebswelle und/oder aus ABS-Drehzahlsensoren bzw. einer aus den ABS-Drehzahlen ermittelten Referenzgeschwindigkeit abgeleitet werden. Ergänzend kann das Fahrzeug 1 auch einen Längsbeschleunigungssensor zur Ermittlung der Längsbeschleunigung a1 aufweisen. Die Längsbeschleunigung a1 kann jedoch auch von der Steuereinrichtung 6 durch die zeitliche Ableitung der Geschwindigkeit v1 ermittelt werden. Die Steuereinrichtung 6 berechnet ein Antriebssollmoment, das positiv oder negativ sein kann, um daraus einzelne Sollmomente für Motor und Dauerbremsen zu bestimmen. Die Steuereinrichtung 6 der Abstandshalteregelung nimmt Daten von dem Motorsteuergerät 5 auf und gibt entsprechend Daten an dieses aus, insbesondere ein Antriebssollmoment- Signal S3 mit dem angeforderten, indizierten Antriebsstrangmoment, das somit das Motorsollmoment mit umfasst. Weiterhin gibt die Steuereinrichtung 6 des ACC Sollmomente an die Dauerbremsen aus, sowie ein Steuersignal S4 an eine Bremssteuereinrichtung 10 eines hier nicht detaillierter gezeigten Bremssystems aus, und ein Steuersignal S6 an eine Getriebesteuerung 18 (automatischer Getriebesteller) einer schematisiert gezeichneten, dem Motor 4 nachgeschalteten Kupplungs- Getriebeeinheit 20, z. B. zum Auskuppeln bzw. Einstellung eines Leerlaufs für einen Rollzustand.

Über die Einstellung der Motorfunktion, Betätigung der Dauerbremsen, Getriebestellung und Bremsbetätigung führt die Steuereinrichtung 6 die Abstandsregelung durch, bei der z.B. in Abhängigkeit der eigenen Fahrgeschwindigkeit v1, der Längsbeschleunigung a1 sowie der Geschwindigkeit v2 des vorderen Fahrzeugs 2 ein Soll-Abstand $dx_{soll}$ ermittelt und der gemessene Istabstand $dx_{ist}$ auf den Soll-Abstand $dx_{soll}$ eingestellt wird.

Das Fahrzeug 1 weist weiterhin ein oder mehrere Nebenaggregate 12 auf, z.B. einen Generator (bei einem Fahrzeug mit Verbrennungsmotor oder auch für Hybridantriebe), eine Kühlmittelpumpe des Motors, eine Kühlmittelpumpe einer Dauerbremse, eine Klimaanlage bzw. einen Klimakompressor, oder ein Kompressor oder ein Nebenabtrieb für Aufbauaggregate des als Nutzfahrzeug ausgebildeten Fahrzeugs 1, und/oder eine Pumpe für eine Servolenkung. Das Nebenaggregat 12 ist über eine Wirkverbindung 4a mit einer Kupplung 16 an den Verbrennungsmotor 4 direkt oder indirekt zuschaltbar. Die Zu- und Abschaltung kann bei z.B. einem Kompressor als Nebenaggregat 12 statt über die Kupplung 16 auch durch elektrisches Abschalten des Nebenaggregates 12 , Umschalten des Nebenaggregates 12 zwischen einem Energiesparbetrieb bzw. Leerlauf und einem Lastlauf erfolgen. Nachfolgend wird beispielhaft weiter die Ansteuerung der Kupplung 16 beschrieben.

Die Steuereinrichtung 6 des ACC kann direkt oder indirekt durch Steuersignale S5 die Kupplung 16 schalten bzw. die Wirkverbindung 4a öffnen und schließen. Hierbei können die Schaltsignale auch nicht direkt von der Steuereinrichtung 6, sondern einer mit der Steuereinrichtung 6 verbundenen weiteren Steuereinrichtung der Kupplung 16 ausgegeben werden, so dass die Steuereinrichtung 6 die Steuersignale S5 an diese Steuereinrichtung der Kupplung 16 ausgibt.

Sämtliche Signale S1 bis S6 können insbesondere über ein oder mehrere fahrzeuginterne CAN-Busse übertragen werden.

Die Steuereinrichtung 6 des ACC ermittelt aus dem berechneten Antriebssollmoment- Signal S3 bzw. Motorsollmoment-Signal, ob derzeit ein lastfreier Betrieb des Verbrennungsmotors 4 bzw. Leerlauf des Verbrennungsmotors 4 vorgesehen ist, bei dem somit die Kupplungs- Getriebeeinheit 20 in Leerlaufstellung bzw. offen ist. Derartige Informationen können statt aus dem Antriebssollmoment gegebenenfalls auch von der Getriebesteuerung 18 an die Steuereinrichtung 6 ausgegeben werden.

Weiterhin ermittelt die Steuereinrichtung 6 des ACC, über welchen Zeitraum Delta-t dieser lastfreie Betrieb des Verbrennungsmotors 4 voraussichtlich eingestellt sein soll bzw. werden wird. Diese Zeitdauer Delta-t stellt somit einen Schätzwert dar, da aufgrund z.B. nicht vorhersehbarer Ereignisse wie einer Bremsbetätigung oder Beschleunigung des vorderen Fahrzeugs 2 oder auch durch den Fahrerwunsch aufgrund Betätigung des Gaspedals oder des Bremspedals der später tatsächlich erreichte Zeitraum von dem Wert Delta-t im Allgemeinen abweichen kann.

Zur Abschätzung des Zeitraums Delta-t werden gemäß einer bevorzugten Ausführungsform die derzeitige Fahrsituation des Fahrzeugs 1 hinter dem Fahrzeug 2 grob klassifiziert und in Abhängigkeit davon verschiedene Berechnungsverfahren BV1, BV2, BV3 eingesetzt:

Berechnungsverfahren BV1 nutzt die mathematische Beschreibung eines ACC-geregelten Annäherungsmanövers des Fahrzeugs 1 an das vordere Fahrzeug 2. Somit ist $dx_{ist} > dx_{soll}$ und $v1 > v2$, d.h. im derzeitigen lastfreien Rollzustand nähert sich das eigene Fahrzeug 1 dem vorderen Fahrzeug 2 an; die Differenzgeschwindigkeit $dv_{ist} = v2_{ist} - v1_{ist}$ ist somit kleiner Null.

Als Zeitdauer Delta-t des (prädizierten) lastfreien Rollzustandes wird die Zeitdauer abgeschätzt, in der sich der Soll-Abstand $dx_{soll}$ zum vorderen Fahrzeug 2 eingestellt haben wird. Hierbei wird vorteilhafterweise im Detail zwischen zwei Situationsprädiktionen unterschieden:

BV1 a: Der Soll-Abstand $dx_{soll}$ wird (gemäß derzeitigen Abschätzungen der Fahrzustandsgrößen des eigenen Fahrzeugs 1 und des vorderen Fahrzeugs 2, d.h. vermutlich mit $dv = 0$) erreicht. Im Allgemeinen wird ein Zielabstand bzw. Soll-Abstand $dx_{soll}$ angegeben, z.B. insbesondere abhängig von v1, und für $dx_{soll}$ ein Ziel- Abstandsbereich definiert durch einen unteren Grenzwert $dx_{su}$ sowie einen oberen Grenzwert $dx_{so}$, z.B. mit +/- 2m um $dx_{soll.}$ herum. BV1a wird somit erreicht, wenn aufgrund der derzeitigen Fahrzeugbewegungen des eigenen Fahrzeugs 1 und des vorderen Fahrzeugs 2 bei Ausnutzung des Rollzustandes dieser Ziel- Abstandsbereich $(dx_{su}, dx_{so})$ mit $dv = 0$ erreicht wird. Somit kann die Zeitdauer Delta-t berechnet werden über die Gleichung

$$Delta\text{-}t = dv_{ist}/da_{ist}$$

mit $dv_{ist}$ als Differenzgeschwindigkeit der Istgeschwindigkeiten v1 und v2 der Fahrzeuge 1 und 2 und entsprechend $da_{ist}$ der Differenz-Beschleunigung der Istbeschleunigungen a1 und a2 der Fahrzeuge 1 und 2.

BV1b: gemäß der zweiten Situationsprädiktion des ersten Berechnungsverfahrens BV1 wird der Soll-Abstand $dx_{soll}$ gemäß den derzeitigen Fahrzustandsdaten der Fahrzeuge 1 und 2 vermutlich unterschritten, so dass das eigene Fahrzeug 1 nach dem Abbau der Differenzgeschwindigkeit dv den Soll-Abstand $dx_{soll}$ zum vorderen Fahrzeug 1 erst wieder neu einzuregeln hat; hierbei kann die Zeitdauer Delta-t berechnet werden über

$$Delta\text{-}t = dv_{ist}/da_{ist} + (dx_{soll} - dx_{ist})/dv_{soll} \ .$$

Bei dem Berechnungsverfahren BV1 wird somit aufgrund der höheren eigenen ersten Geschwindigkeit v1 bzw. negativer Differenzgeschwindigkeit dvist= v2-v1 der Soll-Abstand $dx_{soll}$ erreicht, entweder gemäß BV1 a direkt passend oder gemäß BV1 b mit verbleibender Restgeschwindigkeit, so dass weiter verzögert und - mit dem dazu erforderlichen Zuschalten des Motors wieder neu einzuregeln ist.

BV2: Es wird ein Entfernen des eigenen Fahrzeugs 1 vom vorderen Fahrzeuge 2 während des Rollzustands angesetzt, z.B. nach einem dichten Einschervorgang, bei dem $dx_{ist} < dx_{soll}$ ist. Gemäß dem zweiten Berechnungsverfahren BV2 wird die mathematische Beschreibung eines ACC-geregelten Entfernens des eigenen Fahrzeugs 1 von dem vorderen Fahrzeug 2 beschrieben, und als Zeitdauer Delta-t die zeitliche Dauer bestimmt, in der sich der Soll-Abstand $dx_{soll}$ zum vorderen Fahrzeug 1 eingestellt haben wird. Hierbei kann die Zeitdauer Delta-t berechnet werden über

$$\text{Delta-t} = (dx_{soll} - dx_{ist})/ dv_{soll}.$$

BV3: Bei dem dritten Berechnungsverfahren wird die mathematische Beschreibung des Verlaufs des von dem ACC oder auch einer Tempomatfunktion (CC) vorgegebenen Antriebssollmoments -Signals S3 genutzt, und mit Hilfe des aus der Signalhistorie, d.h. dem zeitlichen Verhalten S3 = S3 (t), die zukünftige Sollmoment-Entwicklung abgeschätzt, d.h. zu extrapolieren bzw. prädizieren. Vorteilhafterweise wird hierzu aus der Signalhistorie ein zeitlicher Gradient, d.h. die erste Ableitung nach der Zeit t ermittelt. Gemäß diesem dritten Berechnungsverfahren wird somit die zeitliche Dauer Delta-t abgeschätzt.

Bei BV3 kann das Antriebssollmoment-Signal S3 linear extrapoliert werden, d.h. dessen derzeitiger zeitlicher Gradient als konstant angesehen und eine lineare Extrapolation in der Zeit t vorgenommen werden, so dass gemäß BV3 eine kontinuierliche, lineare Änderung (Erhöhung oder Absenkung) des Antriebssollmoment-Signals S3 angenommen wird. Ergänzend kann auch die zweite zeitliche Ableitung herangezogen werden, d.h. eine Extrapolation in erster und zweiter zeitlicher Ableitung vorgenommen werden.

Zur Differenzierung zwischen den drei Berechnungsverfahren BV1, BV2 und BV3, insbesondere auch zur weiteren Unterdifferenzierung von BV1 in BV1a und BV1b, sind vorteilhafterweise Gültigkeitsbereiche definiert, die abhängen von den Bewegungsgrößen des eigenen Fahrzeugs 1 und des vorderen Fahrzeugs 2, d.h. von $dx_{ist}$, $v1_{ist}$, $v2_{ist}$, $a1_{ist}$, $a2_{ist}$. Hierbei kann z.B. die derzeitige Istbeschleunigung $a1_{ist}$ und $a2_{ist}$ in der Zukunft als konstant bleibend angesetzt werden, d.h. eine Bewegungsgleichung in zweiter Ordnung der Zeit angesetzt werden. Diese Gültigkeitsbereiche legen für den gesamten relevanten Betriebsbereich fest, welches der Berechnungsverfahren BV1, BV2, BV3 jeweils Anwendung findet. Erfindungsgemäß kann zwischen diesen Berechnungsverfahren bzw. Methoden bedarfsgerecht umgeschaltet werden.

Nachdem Delta-t ermittelt ist, wird es mit einem Schwellwert Delta-ts verglichen, der festlegt, ob es sich lohnt, das Nebenaggregat 12 abzuschalten, d.h. es wird Delta-t>Delta-ts oder Delta-t $\geq$ Delta-ts überprüft.

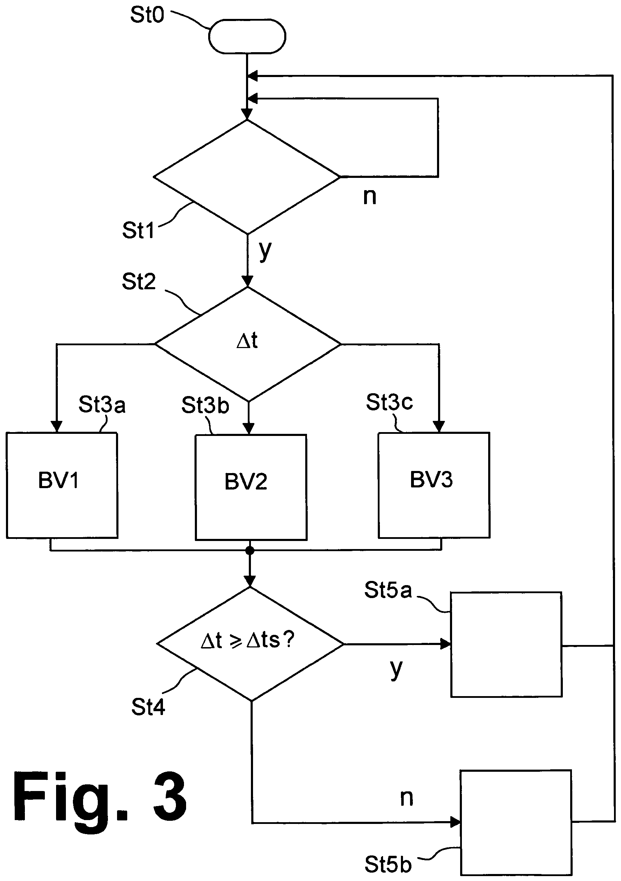

Das erfindungsgemäße Verfahren wird somit durch Fig. 3 beschrieben, wonach es in einem Schritt St0 gestartet wird. Im Schritt St1 wird fortwährend überprüft, ob ein lastfreier Rollzustand vorliegt. Ein derartiger lastfreier Rollzustand wird erkannt, wenn das Antriebssollmoment -Signal S3 kleiner als eine Schwelle anzusetzen ist und weiterhin von der Bremssteuereinrichtung 10 und gegebenenfalls einer Retardersteuereinrichtung keine Nutzung von Dauer- und Radbremsen gefordert wird. Falls in dem Entscheidungsschritt St1 erkannt wird, dass kein derartiger lastfreier Rollzustand vorliegt, wird das Verfahren gemäß Verzweigung n vor St1 zurückgesetzt. Bei Erkennen eines derartigen lastfreien Rollzustandes wird gemäß der Verzweigung y nachfolgend in Schritt St2 differenziert, welche der Berechnungsverfahren BV1, BV2, BV3 anzusetzen ist, und in jedem der drei Fälle nachfolgend in dem Prozessschritt St3a, St3b oder St3c die Zeitdauer Delta-t ($\Delta$t) ermittelt. Nachfolgend wird gemäß Schritt St4 ermittelt, ob Delta-t größer/gleich dem Schwellwert Delta-ts ($\Delta$ts) ist, gemäß dem es sich lohnt, ein Nebenaggregat 12, das normalerweise dauerhaft zugeschaltet sein kann, abzuschalten, um die energetisch günstige Phase des freien Rollzustandes (Segelzustandes) so lange wie möglich aufrecht erhalten zu können.

Nachfolgend wird dann gemäß Verzweigung y in Schritt St5a ein Steuersignal S5 an die Kupplung 16 zum Auskuppeln ausgegeben, und im Fall der Verzweigung n, gemäß dem Delta-t nicht größer/gleich Delta-ts ist, in Schritt St5b kein derartiges Steuersignal S5 ausgegeben, so dass die Kupplung 16 weiter in Wirkeingriff ist. In beiden Fällen wird das Verfahren wiederum vor den Schritt St1 zurückgesetzt.

Bezugszeichenliste (Ist Bestandteil der Beschreibung)

| | |
|---|---|
| 1 | Fahrzeug |
| 2 | vorderes Fahrzeug |
| 3 | Fahrbahn |
| 4 | Verbrennungsmotor |
| 4a | Wirkverbindung |
| 5 | Motorsteuergerät |
| 6 | Steuereinrichtung |
| 7 | Geschwindigkeitssensor |
| 8 | Abstandssensor |
| 10 | Bremssteuereinrichtung |
| 12 | Nebenaggregat |

| 16 | Kupplung |
|---|---|
| 18 | Getriebesteuerung |
| 20 | Kupplungs- Getriebeeinheit |

| S1 | Geschwindigkeitssignal |
|---|---|
| S2 | Abstandsmesssignal |
| S3 | Antriebssollmoment- Signal |
| S4 | Steuersignal an Bremssteuereinrichtung 10 |
| S5 | Steuersignal an Kupplung 16 |
| S6 | Steuersignal an Getriebesteuerung 18 |

| v1 | Geschwindigkeit des Fahrzeugs 1 |
|---|---|
| vist | Ist-Geschwindigkeit/ Ist-Wert von v1 |
| vsoll | Soll-Geschwindigkeit/ Soll-Wert von v1 |
| v2 | Geschwindigkeit des vorderen Fahrzeugs 2 |
| a1 | Längsbeschleunigung des Fahrzeugs 1 |
| a2 | Längsbeschleunigung des vorderen Fahrzeugs 2 |
| $dx_{ist}$ | Ist-Abstand |
| $dx_{soll}$ | Soll-Abstand |
| $dx_{su}$, $dx_{so}$ | Sollabstand-Bereiches |

| dv | Differenzgeschwindigkeit |
|---|---|
| dvist | Differenzgeschwindigkeit, Ist-Wert von dv |
| daist | Differenzbeschleunigung |

| Delta-t | Zeitdauer |
|---|---|
| Delta-ts | Schwellwert |

| BV1, BV2, BV3 | Berechnungsverfahren |
|---|---|
| BV1a, BV1b | Berechnungsverfahren |


**Patentansprüche**

1. Verfahren zur Steuerung oder Regelung von Fahrzeugsystemen (1), bei dem eine Regelung von Fahrzustandsgrößen (v1, a1) eines Fahrzeugs (1) durchgeführt wird, wobei ein lastfreier Rollzustand des Fahrzeugs (1) einstellbar ist und eine voraussichtliche Zeitdauer (Delta-t) des lastfreien Rollzustandes ermittelt wird, wobei in Abhängigkeit der ermittelten voraussichtlichen Zeitdauer (Delta-t) ein Schaltzustand eines Nebenaggregates (12) eingestellt wird und wobei die ermittelte voraussichtliche Zeitdauer (Delta-t) des lastfreien Rollzustandes mit einem vorgegebenen Schwellwert (Delta-ts) verglichen wird und in Abhängigkeit des Vergleichs entschieden wird, ob der Schaltzustand des Nebenaggregats (12) geändert wird oder nicht, **dadurch gekennzeichnet, dass** bei Erkennen, dass die voraussichtliche Zeitdauer (Delta-t) den Schwellwert (Delta-ts) erreicht oder überschreitet, das Nebenaggregat (12) von seiner Wirkverbindung (4a) zu einem Antriebsmotor (4) des Fahrzeugs (1) abgekoppelt wird und/oder eine Einkupplung unterlassen wird.

2. Verfahren nach Anspruch 1, **dadurch gekennzeichnet, dass** als Regelung durchgeführt wird

   - eine Abstandsregelung zu einem vorausfahrenden Fahrzeug (2) unter Messung eines Abstands ($dx_{ist}$) zu dem vorderen Fahrzeug (2) und mindestens einer eigenen Fahrzustandsgröße (v1, a1) des Fahrzeugs (1), und/oder
   - eine Tempomat-Regelung zur Einstellung einer festen Geschwindigkeit (v1) des Fahrzeugs (1).

3. Verfahren nach einem der vorherigen Ansprüche, **dadurch gekennzeichnet, dass** das Nebenaggregat (12) eines oder mehrere aus folgender Gruppe ist/sind:

   Generator für ein Fahrzeug mit Verbrennungsmotor oder Hybridantrieb, Kompressor zur Druckluftförderung, Kompressor einer Klimaanlage, Pumpe einer Servolenkung, Kühlmittelpumpe für den Motor, Kühlmittelpumpe für die Dauerbremse, Nebenabtrieb für Aufbauaggregate.

4. Verfahren nach einem der vorherigen Ansprüche, **dadurch gekennzeichnet, dass** die voraussichtliche Zeitdauer (Delta-t) des lastfreien Rollzustandes mittels der Verwendung von mindestens zwei der folgenden Größen ermittelt wird, welche ausgewählt sind aus der Gruppe, die folgende Größen aufweist:

- Geschwindigkeit (v1, vist, vsoll) des Fahrzeugs (1),
- Beschleunigung (a1) des Fahrzeugs (1),
- dem aktuellen Abstand ($dx_{ist}$) des Fahrzeugs (1) zu dem vorderen Fahrzeug (2),
- dem Soll-Abstand ($dx_{soll}$) des Fahrzeugs (1) zu dem vorderen Fahrzeug (2),
- zweite Geschwindigkeit (v2) des vorderen Fahrzeugs (2),
- zweite Beschleunigung (a2) des vorderen Fahrzeugs (2),
- aktuelle Differenzgeschwindigkeit (dvist) zwischen dem vorderen Fahrzeug (2) und dem Fahrzeug (1)
- aktuelle Differenzbeschleunigung (daist),

insbesondere durch eine Bewegungsgleichung erster oder zweiter Ordnung der Zeit.

5. Verfahren nach einem der vorhergehenden Ansprüche, **dadurch gekennzeichnet, dass** in Abhängigkeit der Fahrzustandsgrößen des Fahrzeugs (1) und des vorderen Fahrzeugs (2) zwischen mehreren alternativen Berechnungsverfahren (BV1a, BV1b, BV2, BV3) ausgewählt wird.

6. Verfahren nach Anspruch 5, **dadurch gekennzeichnet, dass** ein erstes Berechnungsverfahren (BV1a, BV1b) vorgesehen ist, das die mathematische Beschreibung eines ACC-geregelten Annäherungsvorgangs des Fahrzeugs (1) an das vordere Fahrzeug (2) verwendet und die voraussichtliche Zeitdauer (Delta-t) als Zeitdauer des Erreichens eines Soll-Abstandes ($dx_{soll}$) oder Sollabstand-Bereiches ($dx_{su}$, $dx_{so}$) zum vorderen Fahrzeug (2) ermittelt.

7. Verfahren nach Anspruch 6, **dadurch gekennzeichnet, dass** in dem ersten Berechnungsverfahren (BV1) zwischen zwei Unterverfahren (BV1a, BV1b) unterschieden wird, wobei das erste Unterverfahren (BV1a) angesetzt wird, wenn durch den Rollzustand des Fahrzeugs (1) der Soll-Abstand ($dx_{soll}$) innerhalb des Sollabstand-Bereiches ($dx_{su}$, $dx_{so}$) erreichbar ist mit dann dv = 0, wobei die voraussichtliche Zeitdauer (Delta-t) ermittelbar ist über eine Verhältnisbildung der derzeitigen Differenzgeschwindigkeit (dvist) zwischen dem vorderen Fahrzeug (2) und dem Fahrzeug (1) und der derzeitigen Differenzbeschleunigung (daist) zwischen dem vorderen Fahrzeug (2) und dem Fahrzeug (1), insbesondere durch Delta-t = dvist/daist mit:

Delta-t voraussichtlicher Zeitdauer, dvist derzeitige Differenzgeschwindigkeit zwischen dem vorderen Fahrzeug (2) und dem Fahrzeug (1),
daist derzeitige Differenzbeschleunigung zwischen dem vorderen Fahrzeug (2) und dem Fahrzeug (1).

8. Verfahren nach Anspruch 7, **dadurch gekennzeichnet, dass** das zweite Unterverfahren (BV1 b) verwendet wird, wenn ermittelt wird, dass das Fahrzeug (1) durch den Rollzustand den Soll-Abstand ($dx_{soll}$) und/oder Sollabstand-Bereich ($dx_{su}$, $dx_{so}$) voraussichtlich unterschreitet, wobei die voraussichtliche Zeitdauer (Delta-t) ermittelbar ist über

$$\text{Delta-t} = dvist/daist + ( (dx_{soll} - dx_{ist}) / dvsoll_{entfernen} ),$$

mit Delta-t voraussichtlicher Zeitdauer, dvist derzeitige Differenzgeschwindigkeit zwischen dem vorderen Fahrzeug (2) und dem Fahrzeug (1),
daist derzeitige Differenzbeschleunigung zwischen dem vorderen Fahrzeug (2) und dem Fahrzeug (1), $dx_{ist}$ derzeitiger Abstand des Fahrzeugs (1) zu dem vorderen Fahrzeug (2) und $dx_{soll}$ Soll-Abstand des Fahrzeugs (1) zu dem vorderen Fahrzeug, $dvsoll_{entfernen}$ Solldifferenzgeschwindigkeit zum Vergrößern des Abstandes zum vorderen Fahrzeug nach dem Annähern.

9. Verfahren nach einem der Ansprüche 5 bis 8, **dadurch gekennzeichnet, dass** ein zweites Berechnungsverfahren (BV2) zur Ermittlung der voraussichtlichen Zeitdauer (Delta-t) verwendet wird, wenn ermittelt wird, dass der aktuelle Abstand ($dx_{ist}$) zu dem vorderen Fahrzeug (2) unterhalb eines Soll-Abstandes ($dx_{soll}$) oder Sollabstand-Bereiches ($dx_{su}$, $dx_{so}$) liegt, wobei eine mathematische Beschreibung eines ACC-geregelten Entfernens von dem vorderen Fahrzeug (2) verwendet wird und die voraussichtliche Zeitdauer (Delta-t) als Zeitdauer des Entfernens des Fahrzeugs (1) von dem vorderen Fahrzeug (2) ermittelt wird, wobei vorzugsweise gilt:

$$\text{Delta-t} = (dx_{soll} - dx_{ist}) / dvsoll_{entfernen}$$

mit:

Delta-t voraussichtlicher Zeitdauer, $dvsoll_{entfernen}$ Soll-Differenzgeschwindigkeit zwischen dem vorderen Fahrzeug (2) und dem Fahrzeug (1),
$dx_{ist}$ derzeitiger Abstand des Fahrzeugs (1) zu dem vorderen Fahrzeug (2) und
$dx_{soll}$ Soll-Abstand des Fahrzeugs (1) zu dem vorderen Fahrzeug (2).

10. Verfahren nach einem der Ansprüche 5 bis 9, **dadurch gekennzeichnet, dass** ein drittes Bewertungsverfahren (BV3) verwendet wird, bei dem das zeitliche Verhalten eines Antriebssollmoment-Signals (S3) zur Einstellung des Sollmomentes der Antriebsstrangparameter (2) bewertet wird und die voraussichtliche Zeitdauer (Delta-t) aus der Bewertung des zeitlichen Verhaltens des Antriebssollmoment-Signals (S3) abgeschätzt wird, vorzugsweise durch Bewertung des zeitlichen Gradienten des Antriebssollmoment-Signals (S3).

11. Verfahren nach Anspruch 10, **dadurch gekennzeichnet, dass** bei dem dritten Bewertungsverfahren (BV3) eine Projektion oder zeitliche Extrapolation durchgeführt wird mit konstantem zeitlichen Gradient des Antriebssollmoment-Signals (S3).

12. Steuereinrichtung (6) zur Steuerung oder Regelung von Fahrzeugsystemen, vorzugsweise eines Abstandsregelungsverfahrens oder Geschwindigkeitsregelungsverfahrens, insbesondere zur Durchführung eines Verfahrens nach einem der vorherigen Ansprüche
wobei die Steuereinrichtung (6) aufweist:

mindestens eine Schnittstelle zur Aufnahme von Signalen (S1) über Fahrdynamikdaten des Fahrzeugs (1) und eines Abstandssignals (S2) zu einem vorderen Fahrzeug (2) und zur Ausgabe von Steuersignalen (S3, S4, S5, S6) zur Veränderung des Fahrzustandes des Fahrzeugs (1), insbesondere durch Bremseingriff oder Motoreingriff oder Getriebeeingriff, und
eine Steuereinrichtung (6) zur Regelung von Fahrzustandsgrößen (v1, a1) des Fahrzeugs (1),
wobei ein lastfreier Rollzustand des Fahrzeugs (1) einstellbar ist und eine voraussichtliche Zeitdauer (Delta-t) des lastfreien Rollzustandes ermittelt wird,
wobei die Steuereinrichtung (6) in Abhängigkeit der ermittelten voraussichtlichen Zeitdauer (Delta-t) einen Schaltzustand eines Nebenaggregates (12) einstellt und die ermittelte voraussichtliche Zeitdauer (Delta-t) des lastfreien Rollzustandes mit einem vorgegebenen Schwellwert (Delta-ts) vergleicht und in Abhängigkeit des Vergleichs entscheidet, ob der Schaltzustand des Nebenaggregats (12) geändert wird oder nicht,

**dadurch gekennzeichnet, dass**
die Steuereinrichtung (6) das Nebenaggregat (12) von seiner Wirkverbindung (4a) zu einem Antriebsmotor (4) des Fahrzeugs (1) abgekoppelt und/oder eine Einkupplung unterlässt, wenn die voraussichtliche Zeitdauer (Delta-t) den Schwellwert (Delta-ts) erreicht oder überschreitet.

13. Fahrzeug (1) mit einer Steuereinrichtung (6) nach Anspruch 12.

**Claims**

1. Method for performing open-loop or closed-loop control of vehicle systems (1) in which closed-loop control is carried out on driving state variables (v1, a1) of a vehicle (1),
wherein a load-free rolling state of the vehicle (1) can be set and an anticipated time period (Delta-t) of the load-free rolling state is determined,
wherein a switched state of a secondary assembly (12) is set as a function of the determined anticipated time period (Delta-t), and wherein the determined anticipated time period (Delta-t) of the load-free rolling state is compared with a predefined threshold value (Delta-ts) and as a function of the comparison it is decided whether the switched state of the secondary assembly (12) is changed or not,

**characterized in that**
when it is detected that the anticipated time period (Delta-t) reaches or exceeds the threshold value (Delta-ts), the secondary assembly (12) is uncoupled from its operative connection (4a) to a drive engine (4) of the vehicle (1) and/or a coupling is cancelled.

2.  Method according to Claim 1, **characterized in that** closed-loop control is carried out in the form of

    - closed-loop control of the distance from a vehicle (2) travelling ahead by measuring a distance ($dx_{act}$) from the vehicle (2) in front and at least one driving state variable (v1, a1) of the vehicle (1) in question and/or
    - a cruise control process for setting a fixed speed (v1) of the vehicle (1).

3.  Method according to one of the preceding claims, **characterized in that** the secondary assembly (12) comprises one or more members of the following group:

    generator for a vehicle with an internal combustion engine or hybrid drive, compressor for feeding compressed air, compressor of an air conditioning system, pump of a power steering system, coolant pump for the engine, coolant pump for the sustained-action brake, secondary output for structural assemblies.

4.  Method according to one of the preceding claims, **characterized in that** the anticipated time period (Delta-t) of the load-free rolling state is determined by means of the use of at least two of the following variables which are selected from the group comprising the following variables:

    - speed (v1, vact, vsetp) of the vehicle (1),
    - acceleration (a1) of the vehicle (1),
    - the current distance ($dx_{act}$) of the vehicle (1) from the vehicle (2) in front,
    - the setpoint distance ($dx_{setp}$) of the vehicle (1) from the vehicle (2) in front,
    - second speed (v2) of the vehicle (2) in front,
    - second acceleration (a2) of the vehicle (2) in front,
    - current differential speed (dvact) between the vehicle (2) in front and the vehicle (1), and
    - current differential acceleration (daact),

    in particular by means of a movement equation of the first or second order of time.

5.  Method according to one of the preceding claims, **characterized in that** a selection is made between a plurality of alternative calculation methods (BV1a, BV1b, BV2, BV3) as a function of the driving state variables of the vehicle (1) and of the vehicle (2) in front.

6.  Method according to Claim 5, **characterized in that** a first calculation method (BV1a, BV1b) is provided which uses the mathematical description of an ACC-controlled approach procedure of the vehicle (1) to the vehicle (2) in front, and determines the anticipated time period (Delta-t) as a time period for the attainment of a setpoint distance ($dx_{setp}$) or setpoint distance range ($dx_{su}$, $dx_{so}$) from the vehicle (2) in front.

7.  Method according to Claim 6, **characterized in that** in the first calculation method (BV1) a differentiation is made between two sub-methods (BV1a, BV1b) wherein the first sub-method (BV1a) is adopted if the setpoint distance ($dx_{setp}$) within the setpoint distance range ($dx_{su}$, $dx_{so}$) can be reached by means of the rolling state of the vehicle (1), where **in that** case dv = 0, wherein in the anticipated time period (Delta-t) can be determined by forming a ratio of the current differential speed (dvact) between the vehicle (2) in front and the vehicle (1) and the current differential acceleration (daact) between the vehicle (2) in front and the vehicle (1),
    in particular by means of Delta-t=dvact/daact where:

    Delta-t is the anticipated time period, dvact is the current differential speed between the vehicle (2) in front and the vehicle (1) and
    Daact is the current differential acceleration between the vehicle (2) in front and the vehicle (1).

8.  Method according to Claim 7, **characterized in that** the second sub-method (BV1b) is used if it is determined that the vehicle (1) is expected to undershoot the setpoint distance ($dx_{setp}$) and/or setpoint distance range ($dx_{su}$, $dx_{so}$) as a result of the rolling state, wherein the anticipated time period (Delta-t) can be determined by

$$Delta\text{-}t = dvact/daact + ((dx_{setp} - dx_{act})/dvsetp_{moveaway}),$$

where

> Delta-t is the anticipated time period, dvact is the current differential speed between the vehicle (2) in front and the vehicle (1), and
> daact is the current differential acceleration between the vehicle (2) in front and the vehicle (1), $dx_{act}$ is the current distance of the vehicle (1) from the vehicle (2) in front and $dx_{setp}$ is the setpoint distance of the vehicle (1) from the vehicle in front, and $dvsetp_{moveaway}$ is the setpoint differential speed for increasing the distance from the vehicle in front after the approach.

9. Method according to one of Claims 5 to 8, **characterized in that** a second calculation method (BV2) is used for determining the anticipated time period (Delta-t) if it is determined that the current distance ($dx_{act}$) from the vehicle (2) in front is below a setpoint distance ($dx_{setp}$) or setpoint distance range ($dx_{su}$, $dx_{so}$), wherein a mathematical description of an ACC-controlled movement away from the vehicle (2) in front is used, and the anticipated time period (Delta-t) is determined as a time period of the movement of the vehicle (1) away from the vehicle (2) in front, wherein the following preferably applies:

$$Delta\text{-}t = (dx_{setp} - dx_{act})/dvsetp_{moveaway}$$

where:

> Delta-t is the anticipated time period, $dvsetp_{moveaway}$ is the setpoint differential speed between the vehicle (2) in front and the vehicle (1),
> $dx_{act}$ is the current distance of the vehicle (1) from the vehicle (2) in front and
> $dx_{setp}$ is the setpoint distance of the vehicle (1) from the vehicle (2) in front.

10. Method according to one of Claims 5 to 9, **characterized in that** a third evaluation method (BV3) is used in which the chronological behaviour of a drive setpoint torque signal (S3) is evaluated in order to set the setpoint torque of the drive train parameters (2), and the anticipated time period (Delta-t) is estimated from the evaluation of the chronological behaviour of the drive setpoint torque signal (S3), preferably by evaluating the chronological gradient of the drive setpoint torque signal (S3).

11. Method according to Claim 10, **characterized in that** in the third evaluation method (BV3) a projection or chronological extrapolation is carried out with a constant chronological gradient of the drive setpoint torque signal (S3).

12. Control device (6) for performing open-loop or closed-loop control of vehicle systems, preferably of an adaptive cruise control method or speed control method, in particular for carrying out a method according to one the preceding claims,
   wherein the control device (6) has:

> at least one interface for receiving signals (S1) about movement dynamics data of the vehicle (1) and a distance signal (S2) relating to the distance from a vehicle (2) in front, and for outputting control signals (S3, S4, S5, S6) for changing the driving state of the vehicle (1), in particular by means of braking intervention or engine intervention or transmission intervention, and
> a control device (6) for carrying out closed-loop control on driving state variables (v1, a1) of the vehicle (1),
> wherein a load-free rolling state of the vehicle (1) can be set and an anticipated time period (Delta-t) of the load-free rolling state is determined,
> wherein the control device (6) sets a switched state of a secondary assembly (12) as a function of the determined anticipated time period (Delta-t), and compares the determined anticipated time period (Delta-t) of the load-free rolling state with a predefined threshold value (Delta-ts), and decides as a function of the comparison whether the switched state of the secondary assembly (12) is changed or not,

**characterized in that**

the control device (6) uncouples the secondary assembly (12) from its operative connection (4a) to a drive engine (4) of the vehicle (1) and/or cancels a coupling if the anticipated time period (Delta-t) reaches or exceeds the threshold value (Delta-ts).

**13.** Vehicle (1) having a control device (6) according to Claim 12.

**Revendications**

**1.** Procédé de commande ou de régulation de systèmes de véhicule (1), selon lequel une régulation de grandeurs d'état de déplacement (v1, a1) d'un véhicule (1) est effectuée, un état de roulage hors charge du véhicule (1) pouvant être réglé et une durée probable (Delta-t) de l'état de roulage hors charge étant déterminée, un état de commutation d'un groupe auxiliaire (12) étant réglé en fonction de la durée probable (Delta-t) déterminée et la durée probable (Delta-t) déterminée de l'état de roulage hors charge étant comparée avec une valeur de seuil (Delta-ts) prédéfinie et la modification ou non de l'état de commutation du groupe auxiliaire (12) étant décidée en fonction de la comparaison,
**caractérisé en ce que**
en cas de reconnaissance que la durée probable (Delta-t) atteint ou dépasse la valeur de seuil (Delta-ts), le groupe auxiliaire (12) est désaccouplé de sa liaison fonctionnelle (4a) avec un moteur de propulsion (4) du véhicule (1) et/ou un embrayage est inhibé.

**2.** Procédé selon la revendication 1, **caractérisé en ce que** la régulation effectuée est

- une régulation de la distance par rapport à un véhicule qui précède (2) en mesurant une distance ($dx_{ist}$) par rapport au véhicule se trouvant devant (2) et au moins une grandeur d'état de déplacement (v1, a1) propre du véhicule (1), et/ou
- une régulation par régulateur de vitesse en vue de régler une vitesse fixe (v1) du véhicule (1).

**3.** Procédé selon l'une des revendications précédentes, **caractérisé en ce que** le groupe auxiliaire (12) est un ou plusieurs des groupes suivantes :

générateur pour un véhicule équipé d'un moteur à combustion interne ou d'une propulsion hybride, compresseur de production d'air comprimé, compresseur d'un climatiseur, pompe d'une direction assistée, pompe à liquide de refroidissement pour le moteur, pompe à liquide de refroidissement pour le frein continu, prise de force auxiliaire pour les groupes rapportés.

**4.** Procédé selon l'une des revendications précédentes, **caractérisé en ce que** la durée probable (Delta-t) de l'état de roulage hors charge est déterminée en utilisant au moins deux des grandeurs suivantes, lesquelles sont sélectionnées du groupe qui présente les grandeurs suivantes :

- vitesse (v1, vist, vsoll) du véhicule (1),
- accélération (a1) du véhicule (1),
- la distance actuelle ($dx_{ist}$) du véhicule (1) par rapport au véhicule se trouvant devant (2),
- la distance de consigne ($dx_{soll}$) du véhicule (1) par rapport au véhicule se trouvant devant (2),
- la deuxième vitesse (v2) du véhicule se trouvant devant (2),
- la deuxième accélération (a2) véhicule se trouvant devant (2),
- la vitesse différentielle actuelle (dvist) entre le véhicule se trouvant devant (2) et le véhicule (1),
- l'accélération différentielle actuelle (daist), notamment par une équation de mouvement du premier ou du deuxième ordre du temps.

**5.** Procédé selon l'une des revendications précédentes, **caractérisé en ce qu'**une sélection entre plusieurs procédés de calcul alternatifs (BV1a, BV1b, BV2, BV3) est effectuée en fonction des grandeurs d'état de déplacement du véhicule (1) et du véhicule se trouvant devant (2).

**6.** Procédé selon la revendication 5, **caractérisé en ce qu'**il existe un premier procédé de calcul (BV1a, BV1b) qui emploie la description mathématique d'une manoeuvre d'approche régulée par ACC du véhicule (1) vers le véhicule se trouvant devant (2) et détermine la durée probable (Delta-t) comme la durée pour atteindre la distance de consigne

(dx$_{soll}$) ou une plage de distances de consigne (dx$_{su}$, dx$_{so}$) par rapport au véhicule se trouvant devant (2).

7. Procédé selon la revendication 6, **caractérisé en ce que** deux sous-procédés (BV1a, BV1b) sont distingués dans le cas du premier procédé de calcul (BV1), le premier sous-procédé (BV1a) étant appliqué lorsque l'état de roulage du véhicule (1) permet d'atteindre la distance de consigne (dx$_{soll}$) à l'intérieur de la plage de distances de consigne (dx$_{su}$, dx$_{so}$), avec dans ce cas dv = 0, la durée probable (Delta-t) pouvant être déterminée par le biais du calcul d'un rapport de la vitesse différentielle actuelle (dvist) entre le véhicule se trouvant devant (2) et le véhicule (1) et l'accélération différentielle actuelle (daist) entre le véhicule se trouvant devant (2) et le véhicule (1), notamment par Delta-t = dvist/daist avec :

Delta-t désignant la durée probable, dvist la vitesse différentielle actuelle entre le véhicule se trouvant devant (2) et le véhicule (1),
daist l'accélération différentielle actuelle entre le véhicule se trouvant devant (2) et le véhicule (1).

8. Procédé selon la revendication 7, **caractérisé en ce que** le deuxième sous-procédé (BV1b) est employé lorsqu'il est déterminé que le véhicule (1), du fait de l'état de roulage, n'atteindra probablement pas la distance de consigne (dx$_{soll}$) et/ou la plage de distances de consigne (dx$_{su}$, dx$_{so}$), la durée probable (Delta-t) pouvant être déterminée par

$$\texttt{Delta-t = dvist/daist + ((dx}_{\texttt{soll}}\texttt{-dx}_{\texttt{ist}}\texttt{) / dvsoll}_{\texttt{entfernen}}\texttt{),}$$

avec

Delta-t désignant la durée probable, dvist la vitesse différentielle actuelle (dvist) entre le véhicule se trouvant devant (2) et le véhicule (1),
daist l'accélération différentielle actuelle entre le véhicule se trouvant devant (2) et le véhicule (1), dx$_{ist}$ la distance actuelle du véhicule (1) par rapport au véhicule se trouvant devant (2) et dx$_{soll}$ la distance de consigne du véhicule (1) par rapport au véhicule se trouvant devant, dvsoll$_{entfernen}$ la vitesse différentielle de consigne pour augmenter la distance par rapport au véhicule se trouvant devant après l'approche.

9. Procédé selon l'une des revendications 5 à 8, **caractérisé en ce qu'**un deuxième procédé de calcul (BV2) est utilisé pour déterminer la durée probable (Delta-t) lorsqu'il est déterminé que la distance actuelle (dx$_{ist}$) par rapport au véhicule se trouvant devant (2) est inférieure à une distance de consigne (dx$_{soll}$) ou une plage de distances de consigne (dx$_{su}$, dx$_{so}$), une description mathématique d'un éloignement régulé par ACC du véhicule se trouvant devant (2) étant utilisée et la durée probable (Delta-t) étant déterminée comme la durée de l'éloignement du véhicule (1) par rapport au véhicule se trouvant devant (2), en appliquant de préférence :

$$\texttt{Delta-t = (dx}_{\texttt{soll}}\texttt{-dx}_{\texttt{ist}}\texttt{) / dvsoll}_{\texttt{entfernen}}\texttt{,}$$

avec

Delta-t désignant la durée probable, dvsoll$_{entfernen}$ la vitesse différentielle de consigne entre le véhicule se trouvant devant (2) et le véhicule (1),
dx$_{ist}$ la distance actuelle du véhicule (1) par rapport au véhicule se trouvant devant (2) et
dx$_{soll}$ la distance de consigne du véhicule (1) par rapport au véhicule se trouvant devant (2).

10. Procédé selon l'une des revendications 5 à 9, **caractérisé en ce qu'**un troisième procédé de calcul (BV3) est utilisé, avec lequel le comportement dans le temps d'un signal de couple de consigne d'entraînement (S3) est évalué pour le réglage du couple de consigne du paramètre de la chaîne cinématique (2) et la durée probable (Delta-t) est estimée à partir de l'évaluation du comportement dans le temps du signal de couple de consigne d'entraînement (S3), de préférence en évaluant le gradient dans le temps du signal de couple de consigne d'entraînement (S3).

11. Procédé selon la revendication 10, **caractérisé en ce qu'**avec le troisième procédé de calcul (BV3), une projection ou une extrapolation temporelle est effectuée avec un gradient dans le temps constant du signal de couple de consigne d'entraînement (S3).

**12.** Dispositif de commande (6) destiné à commander ou à réguler des systèmes de véhicule, de préférence un procédé de régulation de distance ou un procédé de régulation de vitesse, notamment destiné à mettre en oeuvre un procédé selon l'une des revendications précédentes,
le dispositif de commande (6) possédant :

au moins une interface destinée à collecter des signaux (S1) à propos de données de dynamique de déplacement du véhicule (1) et un signal de distance (S2) par rapport à un véhicule se trouvant devant (2) et destinée à délivrer des signaux de commande (S3, S4, S5, S6) en vue de modifier l'état de déplacement du véhicule (1), notamment par une intervention sur les freins ou une intervention sur le moteur ou une intervention sur la boîte de vitesses, et
un dispositif de commande (6) destiné à réguler des grandeurs d'état de déplacement (v1, a1) du véhicule (1), un état de roulage hors charge du véhicule (1) pouvant être réglé et une durée probable (Delta-t) de l'état de roulage hors charge étant déterminée,
le dispositif de commande (6) réglant un état de commutation d'un groupe auxiliaire (12) en fonction de la durée probable (Delta-t) déterminée et comparant la durée probable (Delta-t) déterminée de l'état de roulage hors charge avec une valeur de seuil (Delta-ts) prédéfinie et décidant de la modification ou non de l'état de commutation du groupe auxiliaire (12) en fonction de la comparaison,

**caractérisé en ce que**
le dispositif de commande (6) désaccouple le groupe auxiliaire (12) de sa liaison fonctionnelle (4a) avec un moteur de propulsion (4) du véhicule (1) et/ou inhibe un embrayage lorsque la durée probable (Delta-t) atteint ou dépasse la valeur de seuil (Delta-ts).

**13.** Véhicule (1) équipé d'un dispositif de commande (6) selon la revendication 12.

# Fig. 1

# Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009010199 A1
- DE 69715438 T2
- DE 102004017115 A1
- DE 2008029453 A1
- WO 2009060241 A1
- EP 1702152 B1
- DE 102008005328 A1
- DE 102007035424 A1